Europäisches Patentamt

European Patent Office

Office européen des brevets

(11) Veröffentlichungsnummer: **0 491 202 A2**

## EUROPÄISCHE PATENTANMELDUNG

(21) Anmeldenummer: **91120531.8**

(22) Anmeldetag: **29.11.91**

(51) Int. Cl.5: **H04L 12/40**

(30) Priorität: **17.12.90 DE 4040248**

(43) Veröffentlichungstag der Anmeldung:
**24.06.92 Patentblatt 92/26**

(84) Benannte Vertragsstaaten:
**DE FR GB IT NL**

(71) Anmelder: **DST Deutsche System-Technik GmbH**
**Hans-Bredow-Strasse 20**
**W-2800 Bremen 44(DE)**

(72) Erfinder: **Metzler, Ernst**
**Lüneburger Strasse 12d**
**W-2850 Bremerhaven(DE)**
Erfinder: **Lübben, Arno**
**Luchtbergstrasse 3**
**W-2800 Bremen 21(DE)**

(74) Vertreter: **Eisenführ, Speiser & Partner**
**Martinistrasse 24**
**W-2800 Bremen 1(DE)**

(54) **Zugriffsverfahren.**

(57) Es wird ein Verfahren zum gesteuerten Zugreifen auf Zeitmultiplex-Kanäle eines Übertragungssystems mittels Token beschrieben. Das Übertragungssystem enthält mehrere auf einen Übertragungsweg zugreifende Stationen, von denen eine einen Zeitrahmen vorgibt. Die Zeitschlitze des Zeitrahmens sind zum Teil als Festkanäle, zu einem anderen Teil für die Übertragung von Paketen und die restlichen Zeitschlitze als Signalisierkanäle verwendet. Jede Station sendet vor dem Aussenden eines Pakets zuerst einen Token in einem Signalisierkanal aus, und sendet das Paket nur nach ungestörtem Empfang dieses Tokens im Signalisierkanal. Die Reihenfolge in der die Stationen Zugriff auf die für Paket-Betrieb verwendeten Kanäle erhalten, hängt von einer in den Token enthaltenen Prioritätszahl und einer Paketlängenzahl ab, die die Länge des zu übertragenden Pakets angibt. Jede Station ermittelt aus den Angaben der in den Signalisierkanälen enthaltenen Token den Startpunkt für ihre eigene Sendung in einem der folgenden Zeitrahmen, indem sie die Summe aller Paketlängen bildet, die in den Token angegeben sind, die sich auf einem im Zeitrahmen vor dem eigenen liegenden Token-Platz befinden.

Fig. 1

992 Übertragungskanäle

Die Erfindung bezieht sich auf ein Verfahren zum Zugreifen auf Zeitmultiplex-Kanäle eines Übertragungssystems mittels Token. Derartige Verfahren und Übertragungssysteme, die nach diesem Zugriffsverfahren arbeiten, sind bekannt.

Aus der EP-A-0 115 883 ist ein Verfahren zum Steuern des Zugriffs auf einen Zeitmultiplex-Nachrichtenübertragungsweg eines Übertragungssystems bekannt, bei dem in einem Zeitrahmen ein Teil der Zeitschlitze als Festkanäle, ein anderer Teil der Zeitschlitze für die Übertragung von Datenpaketen (Bursts) und die restlichen Zeitschlitze für Signalisierzwecke verwendet werden. Die Aufteilung der Zeitschlitze zwischen den Festkanälen und Burst-Kanälen ist variabel. Das Übertragungssystem enthält mehrere Stationen, die auf den Übertragungsweg gleichzeitig zugreifen können.

Der Zugriff auf die Zeitschlitze, die für Paket-Betrieb vorgesehen sind, erfolgt dadurch, daß die betreffende Station auf einem Signalisierkanal ein Bitmuster aussendet, dem eine bestimmte Priorität zukommt. Den Zugriff auf den Zeitschlitz erhält die Station, die das Bitmuster mit der höchsten Priorität aussendet.

Die Wahrscheinlichkeit für jede Station auf die für Burst-Betrieb reservierten Zeitschlitze zugreifen zu können, hängt jedoch nicht nur von der Priorität sondern auch von der Länge der gesendeten Bursts ab. Unter der Annahme, daß alle Station im Mittel mit derselben Priorität senden, ergibt sich dennoch für die Stationen dann keine kalkulierbaren Zugriffszeiten, wenn die gesendeten Paketlängen stark variieren. Dies kann dazu führen, daß ein in einer Station enthaltener Pufferspeicher überläuft, und dadurch Nachrichten verlorengehen, weil diese Station nicht rechtzeitig auf einen Zeitschlitz zugreifen konnte.

Es ist daher Aufgabe der Erfindung ein Verfahren zum Zugreifen auf einen für die Übertragung von Paketen verwendeten Kanal eines Zeitmultiplex-Systems anzugeben, das es jeder Station gestattet, innerhalb einer definierbaren Zugriffszeit auf den Kanal zuzugreifen.

Die Lösung dieser Aufgabe erfolgt erfindungsgemäß durch ein Verfahren, bei dem jede Station vor dem Senden eines Pakets in einem Signalisierkanal einen Token aussendet, der eine Prioritätszahl und eine Paketlängenzahl enthält, die die Länge des zu übertragenden Paketes angibt, und nur bei anschließendem Empfang ihres Tokens im Signalisierkanal das Paket sendet, wobei jede Station aus den Angaben der in den Signalisierkanälen enthaltenen Token den Startpunkt für ihre eigene Sendung in einem der folgenden Zeitrahmen ermittelt, in dem sie die Summe aller Paketlängen bildet, die in den Token angegeben sind, die sich auf einem im Zeitrahmen vor dem eigenen liegenden Token-Platz befinden.

Besonders vorteilhaft ist es, wenn die Station in dem Fall, daß der von ihr ausgesendete Token von einer anderen Station mit höherer Priorität überschrieben wurde, die Prioritätszahl ihres Tokens um einen bestimmten Wert erhöht, und danach ihren Token erneut auf einem Signalisierkanal aussendet. Der Wert der Erhöhung entspricht zweckmäßigerweise der Anzahl der anderen Stationen des Übertragungssystems. Ist schließlich ein Zugriff auf den Übertragungsweg erfolgt und wurde das Paket ausgesendet, wird die Prioritätszahl der betreffenden Station wieder auf den ursprünglichen Wert herabgesetzt.

Die Stationen senden erfindungsgemäß nur dann einen Token aus, wenn im Signalisierkanal ein Frei-Token vorhanden ist. Ist im Signalisierkanal dagegen ein Belegt-Token vorhanden, senden die Stationen keine Token aus, sondern warten so lange, bis in einem nachfolgenden Rahmen ein Frei-Token vorhanden ist.

Die Frei-Token und die Belegt-Token werden von einer bestimmten Station des Übertragungssystems generiert, die die in einem betrachteten Rahmen enthaltenen Token auswertet. Ist die durch diese Token angeforderte Übertragungskapazität kleiner als die maximale in einem Rahmen zur Verfügung stehende, so wird im folgenden Rahmen ein Frei-Token gesendet. Ist die Summe der von den in einem bestimmten Rahmen ausgesendeten Token definierten Paketlängen größer als die Länge eines oder mehrerer Rahmen, so werden so viele aufeinanderfolgender Rahmen mit einem Belegt-Token versehen, wie aufgrund der angeforderten Paketlängen vollständig belegt werden können und erst im folgenden Rahmen ein Frei-Token gesendet.

Das erfindungsgemäße Verfahren wird nachstehend anhand in den Figuren dargestellter Beispiele erläutert.

Es zeigt:

Fig. 1      den Aufbau eines Zeitrahmens für ausschließlichen Paket-Betrieb;

Fig. 2      den Aufbau eines Zeitrahmens für Paket- und Festkanalbetrieb;

Fig. 3      ein erstes Beispiel für Zugriffe auf den Übertragungsweg und die Belegung der Kanäle; und

Fig. 4      ein zweites Beispiel für Zugriffe auf den Übertragungsweg und die Belegung der Kanäle.

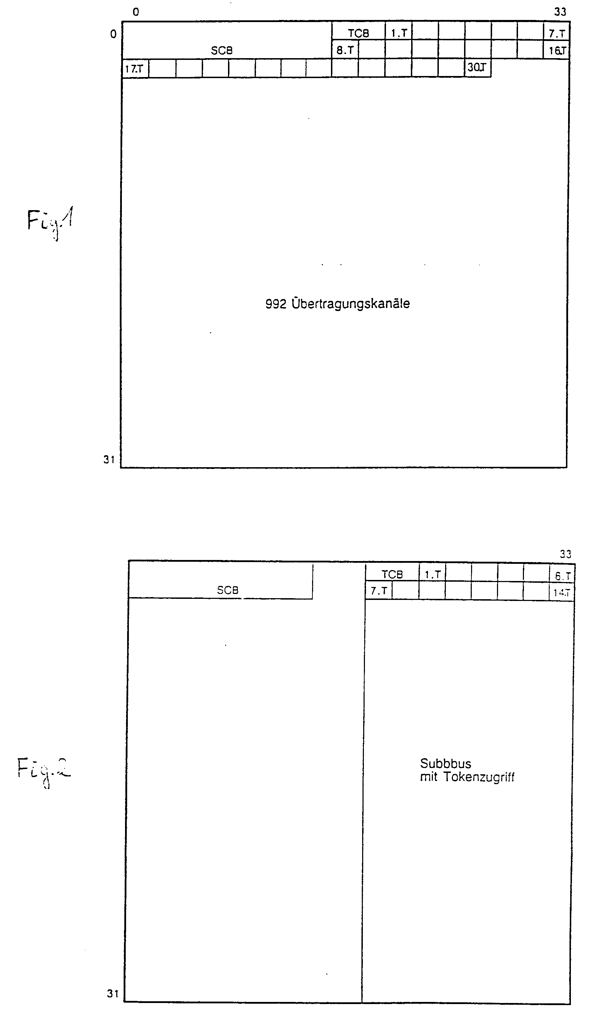

Der in Fig. 1 schematisch dargestellte Zeitrahmen enthält 1088 Kanäle mit einer Länge von 1088 Byte. Von diesen stehen 992 Kanäle für die Übertragung von Informationen zur Verfügung und die restlichen 96 Kanäle sind Signalisierkanäle. Die ersten 32 Signalisierkanäle bilden den sogenannten Systemsteuerblock SCB, in dem die für den Betrieb des Nachrichtenübertragungssystems notwendigen Steuerinformationen übertragen werden. Weitere vier Kanäle bilden einen sogenannten Token-Steuerblock TCB, von denen der erste Kanal entweder einen Belegt-Token oder einen Frei-Token enthält. Die anderen drei Kanäle dienen als Laufzeitausgleich. Die restlichen 60 Kanäle bilden einen sogenannten Token-Block TB. Ein Token besitzt eine Länge von 2 Byte und besteht aus einer Prioritätszahl PZ und einer Paketlängenzahl PL. Die Paketlänge wird in Einheiten von 4 Byte angegeben.

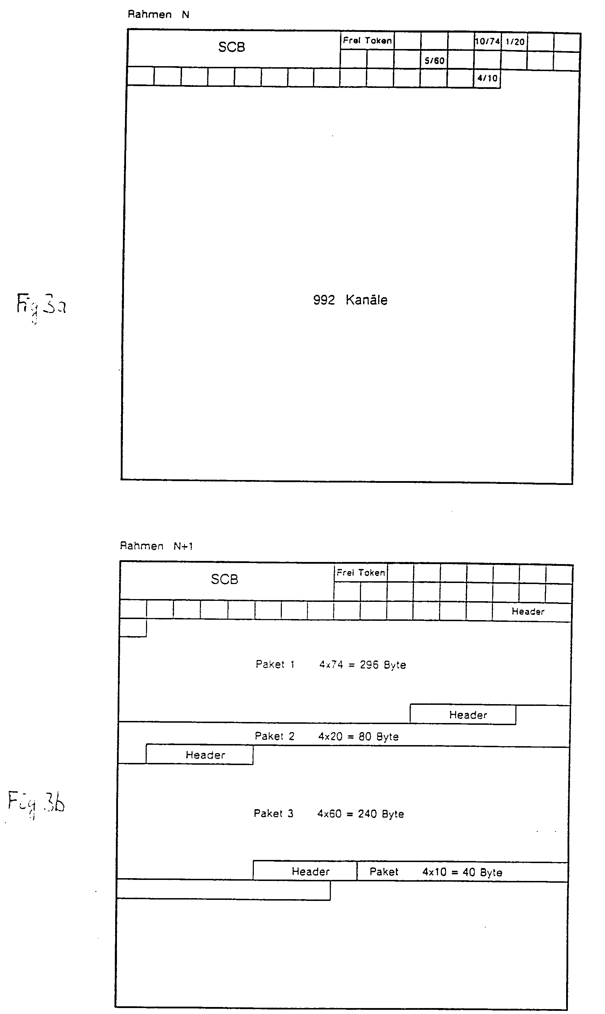

Fig. 2 zeigt einen Zeitrahmen, dessen Kanäle teilweise für Festkanalbetrieb reserviert und teilweise für Paket-Betrieb vorgesehen sind. Er enthält ebenfalls den Systemsteuerblock SCB, den Token-Steuerblock TCB und den Token-Block. Da die Anzahl der für Paket-Betrieb vorgesehenen Kanäle geringer ist als im Beispiel nach Fig. 1, sind auch nur entsprechend weniger Signalisierkanäle, nämlich 28 für den Token-Block vorgesehen.

Jeder Station des Übertragungssystems ist ein bestimmter Token-Platz und eine bestimmte Prioritätszahl zugewiesen. Die Vergabe der Prioritätszahlen und der Token-Plätze erfolgt so, daß an die Stationen, denen derselbe Token-Platz zugewiesen, unterschiedliche Prioritätszahlen vergeben sind. Die den Stationen zugewiesenen Prioritätszahlen können gleich sein, sofern den Stationen unterschiedliche Token-Plätze zugeteilt wurden. Die einem Token einer Station zukommende Priorität hängt von der Prioritätszahl und dem der Station zugeordneten Token-Platz ab.

Eine bestimmte Station des Übertragungssystems geniert die Belegt- und die Frei-Token in Abhängigkeit von der Summe aller zu übertragenden Pakete. Ein Frei-Token in einem Rahmen N signalisiert den Stationen, daß im folgenden Token-Block des Rahmens N Token gesendet werden können. Ein Belegt-Token zeigt an, daß in dem betrachteten Rahmen kein Token-Block vorhanden ist, sondern alle Kanäle für die Informationsübertragung belegt sind. Die bestimmte Station zählt alle im Rahmen N vorhandenen Paketlängenzahlen zusammen. Aus der Summe aller Paketlängenzahlen ergibt sich die Anzahl von Rahmen, in denen sie ein Belegt-Token aussenden muß. Ist die Summe aller Paketlängen kleiner als 992 Byte, sendet sie im folgenden Rahmen N + 1 ein Frei-Token aus.

Möchte eine Station eine Nachricht übertragen, sucht sie nach einem Frei-Token im Token-Steuerblock. Nach Erkennen eines Frei-Token schreibt sie ihre Prioritätszahl und die Paketlänge der zu übertragenden Nachricht in den ihr zugewiesenen Token-Platz ein. Sollten andere Stationen dem gleichen Token-Platz zugeordnet sein, kann sich auf diesem Token-Platz bereits ein Token befinden. Besitzt der Token der betrachteten Station eine höhere prioritätszahl als der Token der anderen Station, so überschreibt die betrachtete Station den anderen Token. Andernfalls wartet sie den nächsten Zeitrahmen ab. Anschließend kontrolliert die betrachtete Station, ob ihr Token von einer dritten Station überschrieben wurde. Findet sie ihren Token im Token-Block wieder, erhält sie Zugriff auf den Übertragungsweg.

Sollte eine Station keinen Zugriff auf den Übertragungsweg erhalten haben, weil eine andere Station ihren Token überschrieben hat, erhöht sie ihre Prioritätszahl um einen bestimmten Betrag und sendet ihren neuen Token in einem der folgenden Rahmen aus. Der Betrag der Erhöhung ist im einfachsten Fall gleich der Anzahl der Stationen, die den gleichen Token-Platz zugewiesen bekommen haben. Durch die Höhe des Betrages und wegen der Zuordnung eines bestimmten Token-Platzes kann jede Station ihre Zugriffszeit deterministisch berechnen. Nach dem Erhalt des Zugriffs wird die Prioritätszahl wieder auf ihren ursprünglichen Wert zurückgesetzt.

Hat eine Station Zugriff auf den Übertragungsweg erhalten, kann sie ihr Paket in einem der nächsten Zeitrahmen aussenden. Den Startpunkt für diese Aussendung ermittelt die Station aus den im Token-Block angegebenen Paketlängen der Pakete, die von Stationen mit einem vor dem eigenen liegenden Token-Platz stammen.

Ein Paket setzt sich aus einem Header, der eigentlichen Information und Datensicherungsbits zusammen. Der Header beginnt mit einem Startwort und enthält die Empfänger- und Absenderadresse sowie die Länge der im Paket vorhandenen Information.

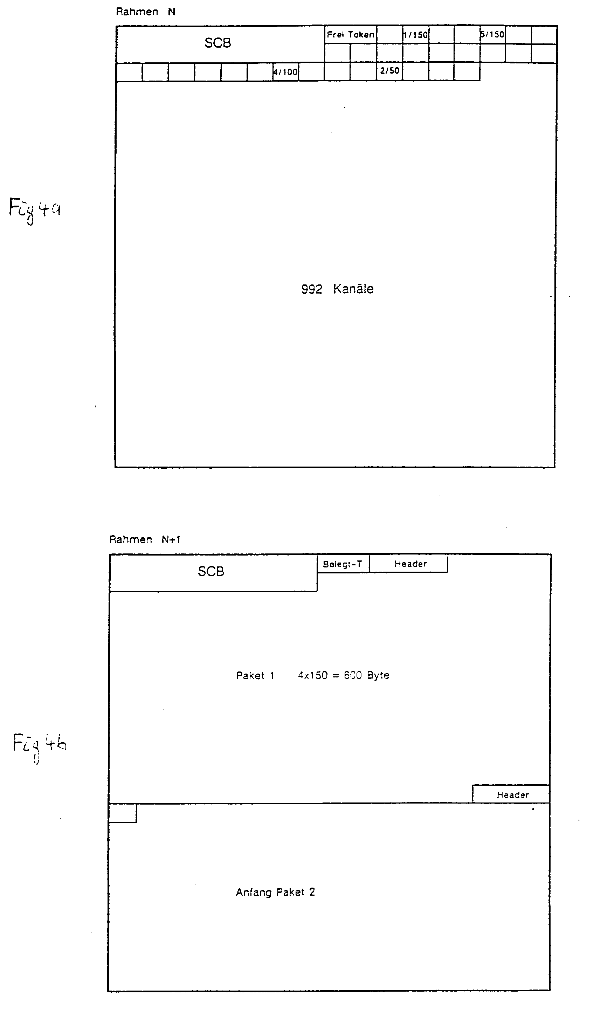

Fig. 3A zeigt einen Zeitrahmen N gemäß Fig. 1, dessen Token-Steuerblock ein Frei-Token und dessen Token-Block auf dem vierten, fünften, elften und dreißigsten Token-Platz einen Token enthält. Die Station mit dem Token-Platz 4 hat die Prioritätszahl 10 und die Paketlängenzahl 74 angegeben. Diese Station hat also 74 x 4 Bytes zu übertragen. Die Gesamtanzahl der in diesem Beispiel zu übertragenden Informationen beträgt 656 Byte. Da die Summe aller Paktelängen die im nächsten Rahmen N + 1 zur Verfügung stehenden 992 Byte nicht überschreitet, wird im nächsten Rahmen im Token-Steuerblock wieder ein Frei-Token gesendet und ein Token-Block vorgesehen. Wie aus Fig. 3b ersichtlich, beginnt die Übertragung des ersten Paketes im ersten Kanal nach dem Token-Block. Die anderen Pakete schließen sich unmittelbar an die vorhergehenden Pakete an. Der Rest des Rahmens N + 1 ist nicht belegt.

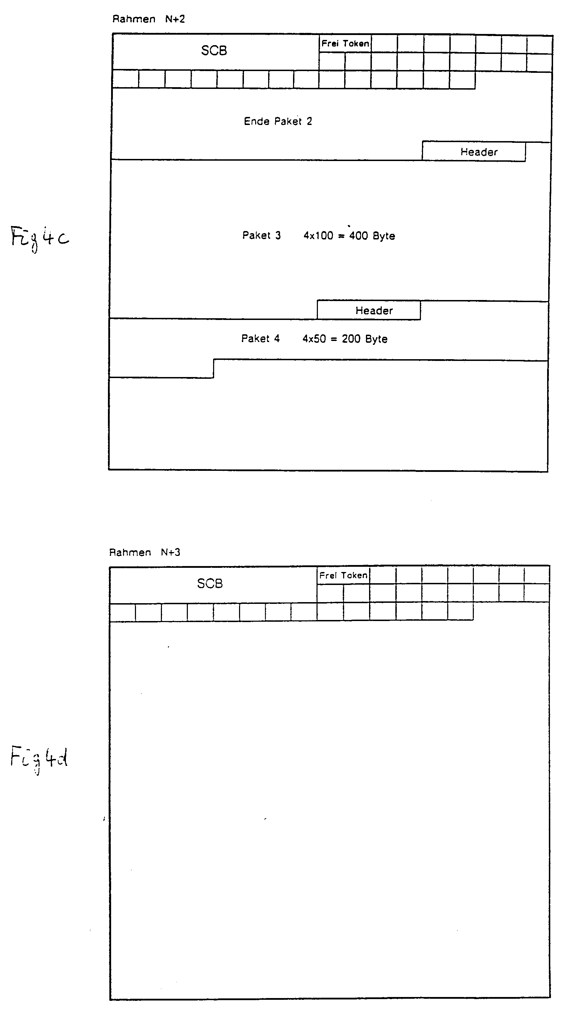

Fig. 4a zeigt genau wie auch Fig. 3a ein Beispiel eines Zeitrahmens N, der einen Frei-Token im Token-Steuerblock und vier Token auf vier Token-Plätzen im Token-Block enthält. Allerdings ist hier die Summe aller Paketlängen mit 1800 Byte größer als die in einem Rahmen übertragbaren 992 Byte. Daher weist der Rahmen N + 1 nach dem Systemsteuerblock ein Belegt-Token auf. Der Rahmen N + 1 enthält keinen Token-Block. Direkt nach dem Belegt-Token beginnt das erste Paket, an das sich nahtlos das zweite Paket anschließt (Fig. 4b). Der Teil des zweiten Paketes, der im Rahmen N + 1 keinen Platz mehr findet, wird im Rahmen N + 2 übertragen. An das zweite Paket schließt sich das dritte und vierte Paket an. Da der Rahmen N + 2 nicht voll belegt ist, enthält er einen Frei-Token und einen Token-Block (Fig. 4c). Da im Token-Block des Rahmens N + 2 kein Token enthalten ist, wird im Rahmen N + 3 (Fig. 4d) überhaupt keine Information übertragen.

Beim Empfangen vergleicht jede Station die im Header der Pakete enthaltene Empfängeradresse mit ihrer eigenen Adresse. Bei Übereinstimmung der Adressen speichert die Station das Paket in einem Empfangsspeicher. Die Länge des Pakets entnimmt sie dem Header und kann dadurch das Ende des Pakets und den Anfang des nächsten Pakets genau bestimmen.

Die Verteilung der Zeitschlitze auf Festkanäle und für die Übertragung von Paketen verwendete Kanäle wird abhängig von der jeweils benötigten Übertragungskapazität gesteuert. Entsprechende Steuerinformationen werden im Systemsteuerblock übertragen. Dabei können auch die Zeitschlitze eines Zeitrahmens in mehrere sogenannte Unterrahmen aufgeteilt werden, die je einen eigenen Token-Steuerblock, Token-Block und eine bestimmte Anzahl von Zeitschlitzen zur Informationsübertragung enthalten und verschiedenen Gruppen von Stationen zugeordnet sind. Dadurch ist auch bei starker Auslastung des Übertragungsweges eine Reservierung von Übertragungskapazität für einzelne Gruppen von Stationen möglich.

## Patentansprüche

1. Verfahren zum gesteuerten Zugreifen auf Zeitmultiplex-Kanäle eines Übertragungssystems mittels Token, wobei das Übertragungssystem mehrere auf einen Übertragungsweg zugreifende Station enthält, von denen eine Station einen Zeitrahmen vorgibt, dessen Zeitschlitze zum Teil als Festkanäle, zu einem anderen Teil für die Übertragung von Paketen (Bursts) und die restlichen Zeitschlitze als Signalisierkanäle verwendet sind, bei dem jede Station, die ein Paket aussenden möchte, zuerst in einem Signalisierkanal einen Token aussendet und nur bei anschließendem Empfang dieses Tokens im Signalisierkanal das Paket aussendet, wobei die Reihenfolge, in der die Stationen Zugriff auf die für Paket-Betrieb verwendeten Kanäle erhalten, von einer in den Token enthaltenen Prioritätszahl (PZ) abhängt, dadurch gekennzeichnet, daß jeder Token zusätzlich eine Paketlängenzahl (PL) enthält, welche die Länge des zu übertragenden Pakets angibt, und daß jede Station aus den Angaben der in den Signalisierkanälen enthaltenen Token den Startpunkt für die Aussendung ihres Pakets in einem der folgenden Zeitrahmen ermittelt, indem die Station die Summe aller Paketlängen bildet, die in den Token angegeben sind, die sich auf einem im Zeitrahmen vor dem eigenen liegenden Token-Platz befinden.

2. Verfahren nach Anspruch 1, dadurch gekennzeichnet, daß jede Station die Prioritätszahl ihres Tokens um einen bestimmten Wert erhöht, wenn sie nach Aussendung ihres Tokens diesen Token nicht in dem be-treffenden Signalisierkanal empfängt, und da-nach ihren Token mit der erhöhten Prioritätszahl erneut auf dem Signalisierkanal aussendet.

3. Verfahren nach Anspruch 2, dadurch gekennzeichnet, daß der Wert der Erhöhung der Prioritätszahl gleich der Anzahl der Stationen ist.

4. Verfahren nach Anspruch 2 oder 3, dadurch gekennzeichnet, daß jede Station nach dem Zugriff auf den Übertragungsweg ihre Prioritätszahl wieder auf ihren ursprünglichen Wert zurücksetzt.

5. Verfahren nach einem der vorhergehenden Ansprüche, dadurch gekennzeichnet, daß die Stationen nur dann einen Token aussenden, wenn im ersten Signalisierkanal ein Frei-Token vorhanden ist, und daß eine bestimmbare Station den Frei-Token oder einen Belegt-Token generiert.

6. Verfahren nach Anspruch 5, dadurch gekennzeichnet, daS die bestimmbare Station die Summe der Paketlängen der in einem Rahmen ausgesendeten Token aller Stationen ermittelt, und dann, wenn die Summe der Paketlängen die Länge eines oder mehrerer Rahmen übersteigt, in einem oder mehreren aufeinanderfolgenden Rahmen einen Belegt-Token sendet, und erst in demjenigen Rahmen einen Frei-Token sendet, der nicht mehr ganz belegt ist.

7. Verfahren nach einem der vorhergehenden Ansprüche, dadurch gekennzeichnet, daß die Aufteilung der Zeitschlitze auf Festkanäle und für die Übertragung von Paketen verwendete Kanäle abhängig von der jeweils benötigten Übertragungskapazität gesteuert wird.

8.  Verfahren nach Anspruch 7,
    dadurch gekennzeichnet, daß die Zeitschlitze eines Zeitrahmens in mehrere, verschiedenen Gruppen von Stationen zugeordnete Unterrahmen aufgeteilt werden.

Fig.1

| | | | | | | TCB | 1.T | | | | | | 7.T |
|---|---|---|---|---|---|---|---|---|---|---|---|---|---|
| | SCB | | | | | 8.T | | | | | | | 16.T |
| 17.T | | | | | | | | | | 30.T | | | |

992 Übertragungskanäle

Fig.2

| | | | | TCB | 1.T | | | | 6.T |
|---|---|---|---|---|---|---|---|---|---|
| SCB | | | | 7.T | | | | | 14.T |

Subbbus
mit Tokenzugriff

Rahmen N

Fig 3a

| | SCB | | | Frei Token | | | | 10/74 | 1/20 | | |
| | | | | | | 5/60 | | | | | |
| | | | | | | | | 4/10 | | | |

992 Kanäle

Rahmen N+1

Fig 3b

| | SCB | | | Frei Token | | | | | | | |
| | | | | | | | | | Header | | |

Paket 1     4x74 = 296 Byte

Header

Paket 2     4x20 = 80 Byte

Header

Paket 3     4x60 = 240 Byte

Header | Paket     4x10 = 40 Byte

Rahmen N

Fig 4a

992 Kanäle

Rahmen N+1

Fig 4b

Paket 1     4x150 = 600 Byte

Header

Anfang Paket 2

Rahmen N+2

| SCB | | Frei Token | | | | | | |
|---|---|---|---|---|---|---|---|---|

Ende Paket 2

Header

**Fig 4c**

Paket 3    4x100 = 400 Byte

Header

Paket 4    4x50 = 200 Byte

Rahmen N+3

| SCB | | Frei Token | | | | | | |
|---|---|---|---|---|---|---|---|---|

**Fig 4d**